(19) Europäisches Patentamt / European Patent Office / Office européen des brevets

(11) **EP 4 427 935 A1**

(12) **EUROPEAN PATENT APPLICATION**
published in accordance with Art. 153(4) EPC

(43) Date of publication:
**11.09.2024 Bulletin 2024/37**

(21) Application number: **22887237.0**

(22) Date of filing: **01.11.2022**

(51) International Patent Classification (IPC):
**B32B 27/32** (2006.01)     **B65D 65/40** (2006.01)

(52) Cooperative Patent Classification (CPC):
**B32B 27/32; B65D 65/40**

(86) International application number:
**PCT/JP2022/040906**

(87) International publication number:
**WO 2023/074912 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2021 JP 2021179033**

(71) Applicant: **Japan Polyethylene Corporation
Tokyo 100-8251 (JP)**

(72) Inventors:
• **KAWAMURA MASUMURA Chiaki
Kawasaki-shi, Kanagawa 210-8548 (JP)**

• **UTO Yuichi
Kawasaki-shi, Kanagawa 210-8548 (JP)**
• **SAITOU Yoshimasa
Kawasaki-shi, Kanagawa 210-8548 (JP)**
• **IWAMOCHI Hirotoshi
Kawasaki-shi, Kanagawa 210-8548 (JP)**
• **JIN Zhengzhe
Kawasaki-shi, Kanagawa 210-8548 (JP)**
• **SAKAMOTO Shinji
Kawasaki-shi, Kanagawa 210-8548 (JP)**

(74) Representative: **Hoffmann Eitle
Patent- und Rechtsanwälte PartmbB
Arabellastraße 30
81925 München (DE)**

(54) **LAMINATE AND LAMINATE PRODUCTION METHOD**

(57)     Provided is a laminate excellent in both adhesiveness to a substrate or the like and easy-openability such as easy-tearability, and a laminate production method.

The laminate comprises at least four layers which are, respectively, a substrate layer 1($\alpha$), a resin layer ($\beta$), an adhesive agent layer ($\gamma$) and a substrate layer 2 ($\delta$). The substrate layer 1($\alpha$), the resin layer ($\beta$), the adhesive agent layer ($\gamma$) and the substrate layer 2($\delta$) are laminated adjacent to one another, and the resin layer ($\beta$) and the adhesive agent layer ($\gamma$) satisfy, respectively, the following characteristics:

resin layer ($\beta$): comprising a polyethylene resin composition (B) containing an ethylene-based copolymer (A) having characteristics (a-1) to (a-4), and

adhesive agent layer ($\gamma$): comprising a reaction product of a polyol compound and a polyisocyanate compound.

EP 4 427 935 A1

**Description**

Technical Field

The present invention relates to a laminate and a laminate production method, and more particularly to a laminate including a first substrate layer, a resin layer containing a polyethylene resin composition made from a specific ethylene-based copolymer and the like, an adhesive agent layer containing a reaction product of a specific compound, and a second substrate layer, a method for producing the laminate, and a packaging material obtained using the laminate.

Background Art

For improving the content preserving properties of packagings, containers and the like, laminates have been heretofore used in which a metal foil having barrier properties, such as an aluminum foil, a plastic film vapor-coated with a metal, an inorganic substance or an organic substance, a barrier-coated plastic film or paper substrate, a film of a barrier material such as an ethylene/vinyl alcohol copolymer, or a laminated film including the materials of the same type or different types.

In these laminates, polyethylene-based resin compositions made from high-pressure low-density polyethylene (LDPE), an ethylene/vinyl acetate copolymer (EVA) or the like have been used for heat-sealing layers. In recent years, for improving the heat-sealing strength, low-temperature heat-sealing properties, hot tack properties, impact resistance, pinhole resistance and the like of these laminates, linear low-density polyethylene (LLDPE), particularly LLDPE polymerized with a metallocene catalyst, has been proposed to be used, and has come into wide use as sealants for soft packaging, paper containers for liquid, and the like. However, in the case of easily tearable packaging applications, there are problems such as requirement of much power for opening and elongation of a resin layer because of poor tearability. In addition, for containers having a straw hole, such as paper containers for liquid, there are problems such as poor straw penetrability.

For production of these laminates, a dry lamination method, coextrusion molding or extrusion lamination molding is used. The extrusion lamination molding involves or does not involve application of an adhesive, and in either case, stable and high adhesive strength is required.

Many attempts have been made to solve such problems, and for example, a laminate of LLDPE polymerized with a metallocene catalyst and LLDPE polymerized with a Ziegler catalyst has been proposed (see Patent Literature 1). In this laminate, the tearability is somewhat improved by the LLDPE polymerized with a Ziegler catalyst, but the elongation of the LLDPE layer polymerized with a metallocene catalyst cannot be eliminated, and more importantly, heat-sealing properties are heavily sacrificed. Therefore, the approach cannot be desirable, and bonding to a substrate is not described.

Further, an invention has been proposed in which LDPE having a specific swell ratio is blended in LLDPE polymerized with a metallocene catalyst (see Patent Literature 2). However, it cannot be said that acceptable heat-sealing strength and tearing balance are achieved, and Patent Literature 2 does not describe an adhesive property to a substrate.

In addition, Patent Literature 3 from the present applicant discloses an invention in which an ethylene terpolymer containing ethylene, propylene, 1-hexene or 1-octene as essential components and LDPE are blended (see Patent Literature 3), but piercing properties and adhesive property are not described.

As a method using no adhesive, a method using a polyethylene-based resin exhibiting specific physical properties or containing a specific copolymer (see Patent Literature 4) has been proposed, but Patent Literature 4 does not either describe adhesive strength and tearability or disclose achievement of both excellent adhesive strength and excellent tearability.

Citation List

Patent Literature

Patent Literature 1: JP H10-24539 A
Patent Literature 2: JP 2000-212339 A
Patent Literature 3: JP 2006-82547 A
Patent Literature 4: JP 2001-191452 A

Summary of Invention

Technical Problem

In view of the problems described above, an object of the present invention is to provide a laminate excellent in both adhesive property to a substrate or the like and easy-openability such as easy-tearability, and a laminate production method.

Another object of the present invention is to provide a packaging material obtained using such a laminate.

Solution to Problem

The present inventors have intensively conducted studies for solving the above-described problems, and resultantly discovered that a laminate including at least four layers including a resin layer with a polyethylene resin composition containing an ethylene-based copolymer having the following physical properties (a-1) to (a-4), that is, an ethylene-based copolymer which contains predetermined amounts of ethylene as a main component and an accessory component other than ethylene and in which MFR, a total amount of melting heat and a crystallization temperature are within certain ranges, and an adhesive agent layer containing a reaction product of a polyol compound and a polyisocyanate compound has excellent adhesive property and excellent easy-tearability, both of which are achieved to exhibit excellent content protecting performance and handleability, and such a laminate is suitably used as a packaging material, leading to completion of the present invention.

That is, a first invention of the present invention provides a laminate comprising at least four layers which are, respectively, a substrate layer 1($\alpha$), a resin layer ($\beta$), an adhesive agent layer ($\gamma$) and a substrate layer 2 ($\delta$), wherein the substrate layer 1($\alpha$), the resin layer ($\beta$), the adhesive agent layer ($\gamma$) and the substrate layer 2($\delta$) are laminated adjacent to one another, and the resin layer ($\beta$) and the adhesive agent layer ($\gamma$) satisfy, respectively, the following characteristics:

resin layer ($\beta$): comprising a polyethylene resin composition (B) containing an ethylene-based copolymer (A) having the following characteristics (a-1) to (a-4):

(a-1) MFR (190°C, 21.18 N load) is 0.1 to 100 g/10 min,
(a-2) a total amount of melting heat $\Delta$Hm is 30 to 120 J/g in DSC,
(a-3) a crystallization temperature Tc is 25 to 90°C, and
(a-4) containing 70 to 98 mol% of constituent units derived from ethylene as a main component, and 2 to 30 mol% of constituent units other than ethylene as an essential accessory component, and

adhesive agent layer ($\gamma$): comprising a reaction product of a polyol compound and a polyisocyanate compound.

A second invention of the present invention provides the laminate according to the first invention, wherein the polyethylene resin composition (B) contains a polyethylene resin (C) having the following characteristics (c-1) to (c-2) :

(c-1) MFR (190°C, 21.18 N load) is 0.1 to 100 g/10 min, and
(c-2) a density is 0.91 to 0.97 g/cm$^3$.

A third invention of the present invention is to provide the laminate according to the second invention, wherein a content ratio between the ethylene-based copolymer (A) and the polyethylene resin (C) (weight ratio A : C) in the polyethylene resin composition (B) is 98 to 2 : 2 to 98.

A fourth invention of the present invention provides the laminate according to any one of the first to third inventions, wherein the polyethylene resin composition (B) further satisfies the following characteristics (b-1) and (b-2) :

(b-1) MFR (190°C, 21.18 N load) is 1 to 100 g/10 min, and
(b-2) a density is 0.88 to 0.94 g/cm$^3$.

A fifth invention of the present invention provides the laminate according to any one of the first to fourth inventions, wherein the ethylene-based copolymer (A) further satisfies the following characteristics (a-5) to (a-7):

(a-5) 80 to 98 mol% of constituent units derived from ethylene as a main component, 2 to 20 mol% of constituent units derived from propylene as an essential accessory component are contained, and 5 mol% or less of constituent units derived from a third $\alpha$-olefin that is an olefin other than ethylene and propylene as an accessory component may be contained

(where when constituent units derived from the third $\alpha$-olefin are contained, a total amount of constituent units derived from ethylene, constituent units derived from propylene and constituent units derived from the third $\alpha$-olefin does not exceed 100 mol%),

(a-6) a density is 0.88 to 0.94 g/cm$^3$, and

(a-7) a total amount of vinyl and vinylidene moieties in the ethylene-based copolymer is 0.35 (number/total 1,000 C) or more

(where the number of vinyl and vinylidene moieties is a number per total of 1,000 carbon atoms in a main chain and side chains which is measured by NMR).

A sixth invention of the present invention provides the laminate according to any one of the first to fifth inventions, wherein the ethylene-based copolymer (A) further satisfies the following characteristic (a-8):

(a-8) the number of comonomer branches (Y) in the ethylene-based copolymer and the density (X) satisfy the relationship of the following expression (1):

$$\text{expression (1): } (Y) \geq -1157 \times (X) + 1080$$

(where Y is a number per total of 1,000 carbon atoms in a main chain and side chains which is measured by NMR).

A seventh invention of the present invention provides the laminate according to any one of the first to sixth inventions, wherein the ethylene-based copolymer (A) further satisfies the following characteristic (a-9):

(a-9) the number of comonomer branches (Y) in the ethylene-based copolymer and the density (X) satisfy the relationship of the following expression (2):

$$\text{expression (2): } (Y) \geq -1157 \times (X) + 1084$$

(where Y is a number per total of 1,000 carbon atoms in a main chain and side chains which is measured by NMR).

An eighth invention of the present invention provides the laminate according to any one of the first to seventh inventions, wherein an oxygen permeability of the substrate layer 1($\alpha$) is 1,300 mL/m$^2$·day·MPa or less at 20°C and 65% RH.

A ninth invention of the present invention provides the laminate according to any one of the first to eighth inventions, wherein the laminate is formed by an extrusion coating method.

A tenth invention of the present invention provides a packaging material obtained using the laminate according to any one of the first to ninth inventions.

Advantageous Effects of Invention

The present invention provides a laminate and a laminate production method, and the laminate exhibits good adhesive property to a substrate or the like, and good easy-tearability, and has excellent content protecting performance and openability. In addition, the adhesive strength is improved, so that the high-rate processability of the laminate can also be improved.

In addition, a packaging material obtained using the laminate of the present invention has excellent adhesive property and excellent easy-tearability, and can be suitably used for various applications such as films for easily tearable packaging bags, films for food packaging, paper containers for liquid, containers for packaging frozen confectionery such sweet bean jelly and jelly, dry food, fat/oil and confectionery, paper bundling, paper cups, and paper trays.

Description of Embodiments

The present invention provides a laminate including at least four layers which are, respectively, a substrate layer 1($\alpha$), a resin layer ($\beta$), an adhesive agent layer ($\gamma$) and a substrate layer 2($\delta$). The substrate layer 1($\alpha$), the resin layer ($\beta$), the adhesive agent layer ($\gamma$) and the substrate layer 2($\delta$) are laminated adjacent to one another. The resin layer ($\beta$) contains a polyethylene resin composition (B) containing an ethylene-based copolymer (A) having the following characteristics (a-1) to (a-4), and (a-5) to (a-9) if necessary, and a polyethylene resin (C) having the following characteristics (c-1) and (c-2), and the adhesive agent layer (γ) contains a specific compound.

Hereinafter, the present invention will be described in detail item by item.

1. Polyethylene resin composition (B)

(1) Ethylene-based copolymer (A)

The ethylene-based copolymer (A) for use in the present invention satisfies all of the following characteristics (a-1) to (a-4), and more preferably has any one or more of characteristics (a-5) to (a-9) if necessary.

Specifically, the ethylene-based copolymer (A) for use in the present invention includes (i) an ethylene-based copolymer (A) satisfying characteristics (a-1) to (a-4), and preferably (ii) an ethylene-based copolymer (A) satisfying characteristics (a-1) to (a-4) and characteristics (a-5) to (a-7), (iii) an ethylene-based copolymer (A) satisfying characteristics (a-1) to (a-4) and a characteristic (a-8), (iv) an ethylene-based copolymer (A) satisfying characteristics (a-1) to (a-4) and characteristics (a-5) to (a-8), (v) an ethylene-based copolymer (A) satisfying characteristics (a-1) to (a-4) and a characteristic (a-9), (vi) an ethylene-based copolymer (A) satisfying characteristics (a-1) to (a-4) and characteristics (a-5) to (a-7) and (a-9), (vii) an ethylene-based copolymer (A) satisfying characteristics (a-1) to (a-4) and characteristics (a-8) and (a-9), and (viii) an ethylene-based copolymer (A) satisfying characteristics (a-1) to (a-4) and characteristics (a-5) to (a-9).

(a-1) Melt flow rate (MFR)

The melt flow rate of the ethylene-based copolymer (A) for use in the present invention (MFR: 190°C, load: 21.18 N) is 0.1 to 100 g/10 min, preferably 1 to 80 g/10 min, and more preferably 5 to 70 g/10 min. An MFR of less than 0.1 g/10 min is not preferable because extensibility during molding is deteriorated, leading to an increase in load on a motor in an extrusion machine. On the other hand, an MFR of more than 100 g/10 min is not preferable because the state of a molten film during molding is destabilized. The MFR of the ethylene-based copolymer is adjusted by, for example, a method in which the polymerization temperature, the comonomer amount, or the like is appropriately adjusted.

Here, the MFR is a value measured according to JIS-K6922-2: 1997, Appendix (190°C, load: 21.18 N).

(a-2) Total amount of melting heat ΔHm

The total amount of melting heat ΔHm of the ethylene-based copolymer (A) for use in the present invention is 30 to 120 J/g, preferably 32 to 118 J/g, and more preferably 35 to 115 J/g. A ΔHm of less than 30 J/g is not preferable because blocking becomes insufficient. On the other hand, a ΔHm of more than 120 J/g is not preferable because adhesive property becomes insufficient. For adjusting the ΔHm of the ethylene-based copolymer, for example, a method is employed in which the content of a comonomer, the polymerization temperature, the amount of a catalyst, or the like is appropriately adjusted.

Here, ΔHm indicates the amount of melting heat in a melting curve with a differential scanning calorimeter (DSC). In general, an ethylene-based resin having low crystallinity tends to have a broader melting peak and smaller ΔHm as compared to an ethylene-based resin having high crystallinity.

(a-3) Crystallization temperature Tc

The crystallization temperature Tc of the ethylene-based copolymer (A) for use in the present invention is 25 to 90°C, preferably 27 to 88°C, and more preferably 30 to 85°C. A Tc of lower than 25°C is not preferable because the crystallinity is excessively low, resulting in insufficient blocking. On the other hand, a Tc of higher than 90°C is not preferable because a high-crystalline component is present, resulting in insufficient adhesiveness.

Here, Tc indicates a temperature corresponding to the largest of crystallization peaks in a crystallization curve with a differential scanning calorimeter (DSC).

(a-4) Monomer configuration of ethylene-based copolymer (A)

The ethylene-based copolymer (A) for use in the present invention is an ethylene-based copolymer containing 70 to 98 mol% of constituent units derived from ethylene as a main component and 2 to 30 mol% of constituent units derived from a comonomer other than ethylene as an accessory component. It is preferable that the amount of constituent units derived from ethylene is 72 to 97 mol%, and the amount of constituent units derived from a comonomer other than ethylene is 3 to 28 mol%, and it is more preferable that the amount of constituent units derived from ethylene is 75 to 95 mol%, and the amount of constituent units derived from propylene is 5 to 25 mol%. It is not preferable that the amount of the constituent unit derived from ethylene is less than 70 mol% because blocking becomes insufficient. It is not preferable that the amount of the constituent unit derived from ethylene is more than 98 mol% because adhesiveness becomes insufficient.

Here, the monomer amount such as an ethylene content is a value obtained by performing measurement by $^{13}$C-NMR under conditions described in the example section described later, followed by calculation.

Note that for the type of comonomer, the comonomer may be of one type or a combination of two or more types as long as all of characteristics (a-1) to (a-4) are satisfied and further, preferably any one or more of characteristics (a-5) to (a-9) are satisfied (more specifically, the ethylene-based copolymers (A) (ii) to (viii)), and the ethylene-based copolymer (A) may be of one type or a combination of two or more types as long as all of characteristics (a-1) to (a-4) are satisfied and further, preferably any one or more of characteristics (a-5) to (a-9) are satisfied (more specifically, the ethylene-based copolymers (A) (ii) to (viii)).

Specific examples of the comonomer include $\alpha$-olefins such as propylene, 1-butene, 1-pentene, 1-hexene, 1-octene, 1-heptene, 4-methyl-pentene-1,4-methyl-hexene-1 and 4,4-dimethylpentene-1, diene compounds such as 1,5-hexadiene, 1,6-heptadiene, 1,7-octadiene, 1,8-nonadiene and 1,9-decadiene, and acids and ester compounds such as vinyl acetate, methyl acrylate, ethyl acrylate, methyl methacrylate, maleic anhydride, methacrylic acid and metal ion-containing methacrylic acid.

The comonomer may be of one type or a combination of two or more types.

(a-5) Accessory component derived from propylene

The ethylene-based copolymer (A) for use in the present invention is an ethylene-based copolymer containing 80 to 98 mol% of constituent units derived from ethylene as a main component and 2 to 20 mol% of constituent units derived from propylene as an accessory component, and a specific example thereof is a copolymer obtained by performing polymerization by a catalytic polymerization method, where the copolymer is obtained by performing random polymerization in substantially linear form. A specific example thereof is a random copolymer of ethylene and propylene. It is preferable that the amount of constituent units derived from ethylene is 82 to 97 mol%, and the amount of constituent units derived from propylene is 3 to 18 mol%, and it is more preferable that the amount of constituent units derived from ethylene is 85 to 95 mol%, and the amount of constituent units derived from propylene is 5 to 15 mol%. Here, the monomer amount such as an ethylene content is a value obtained by performing measurement by $^{13}$C-NMR under conditions described in examples described later, followed by calculation.

Note that a composition is preferable in which constituent units derived from other $\alpha$-olefins, in particular, $\alpha$-olefins having 4 to 20 carbon atoms, and other monomer components are not present at all, but such components may be present in a substantially very small amount. In the present specification, the $\alpha$-olefin other than ethylene and propylene is referred to as a third $\alpha$-olefin. The ethylene-based copolymer (A) according to the present invention may contain, for example, 5 mol% or less, preferably 2 mol% or less, more preferably 1.5 mol% or less, still more preferably 1 mol% or less, and most preferably 0.5 mol% or less of a constituent units derived from the third $\alpha$-olefin other than ethylene and propylene as an accessory component. Here, when the ethylene-based copolymer (A) according to the present invention contains constituent units derived from the third $\alpha$-olefin, the total amount of constituent units derived from ethylene, constituent units derived from propylene and constituent units derived from the third $\alpha$-olefin does not exceed 100 mol%. In this case, the content of constituent units derived from propylene is preferably higher than the content of constituent units derived from the third $\alpha$-olefin. When the ethylene-based copolymer (A) according to the present invention contains constituent units derived from the third $\alpha$-olefin, one or more third $\alpha$-olefins can be used.

When propylene is used as an essential comonomer as an accessory component, and in particular, a high-pressure ion polymerization method using a metallocene catalyst as described later is employed, it is possible to specifically obtain an ethylene/$\alpha$-olefin copolymer in which the total number of vinyl and vinylidene moieties is large. On the other hand, when an $\alpha$-olefin such as 1-hexene or 1-octene is polymerized as a comonomer main component, this effect is hardly obtained.

As a copolymer containing ethylene and propylene as constituent components, a rubber-like polymer which is so-called ethylene propylene rubber (EPM), contains a propylene component in an amount of more than 20 mol%, has a density of 0.870 g/cm$^3$ or less, and is obtained by a solution polymerization method is used in the field of elastomers. The ethylene-based copolymer (A) according to the present invention is different in density range and amounts of contained ethylene and propylene and completely different in physical properties and the like from such ethylene propylene rubber.

A propylene-ethylene copolymer obtained by incorporating a slight amount of an ethylene component in a propylene polymer in a production process is also known, and such a copolymer is significantly different in propylene content and the like and completely different in physical properties and the like from the ethylene-based copolymer (A) according to the present invention.

(a-6) Density

The ethylene-based copolymer (A) for use in the present invention has a density of 0.88 to 0.94 $g/cm^3$, preferably 0.885 to 0.94 $g/cm^3$, and more preferably 0.89 to 0.93 $g/cm^3$. A density of less than 0.88 $g/cm^3$ is not preferable because blocking becomes insufficient. On the other hand, a density of more than 0.94 $g/cm^3$ is not preferable because adhesive property becomes insufficient.

For adjusting the density of the polymer, for example, a method is employed in which the content of a comonomer, the polymerization temperature, the amount of a catalyst, or the like is appropriately adjusted. Note that the density of the ethylene-based copolymer is measured according to JIS-K6922-2: 1997, Appendix (for low-density polyethylene) (measurement temperature: 23°C).

(a-7) Total amount of vinyl and vinylidene

In a copolymer obtained by copolymerizing ethylene and one or more $\alpha$-olefins, even without adding a diene monomer with purpose, various double bonds (vinyl, vinylidene, cis-vinylene, trans-vinylene, trisubstituted olefins), which vary in amount and type, may be formed due to a difference in mechanism of the production process.

Heretofore, to obtain a good crosslink characteristic as a solar cell sealing material, the increased number of double bonds contained in an ethylene-$\alpha$-olefin copolymer has been known to lead to a good crosslink characteristic, but in the field of laminates with a polyethylene resin composition in which good adhesiveness is required, studies have not been conducted on a difference depending on the amount and the type of double bonds.

In the present invention, it has been found that among various double bonds contained in the ethylene-based copolymer, vinyl and vinylidene are particularly important in securement of both adhesive strength and easy-tearability, and the effects of the present invention are achieved by producing an ethylene-based copolymer in which the total amount of vinyl and vinylidene is larger than that in copolymerization that is commonly obtained, and using the produced ethylene-based copolymer as an ethylene-based copolymer for polyethylene resin compositions for laminates, leading to completion of the present invention.

In the ethylene-based copolymer (A) for use in the present invention, the total amount of double bonds of vinyl and vinylidene per total number of 1,000 carbon atoms in the main chain and side chains, which is measured by NMR, is 0.35 or more (number/total 1,000 C), preferably 0.40 to 5.0 (number/total 1,000 C), more preferably 0.45 to 4.5 (number/total 1,000 C), still more preferably 0.50 to 4.0 (number/total 1,000 C).

When the total amount of vinyl and vinylidene is within the above-described range, a laminate resin composition excellent in adhesive strength is obtained, and if the total amount of vinyl and vinylidene is less than 0.35, the adhesive strength is not sufficient. The total amount of vinyl and vinylidene can be controlled to fall within the above-described range by appropriately adjusting selection of an appropriate metallocene catalyst, the polymerization temperature, and the type of comonomer. The number of vinyl and vinylidene moieties can be adjusted by production conditions such as the type of comonomer, the comonomer amount and the polymerization temperature.

The number of these double bonds is a number per total of 1,000 carbon atoms in the main chain and side chains, is a value calculated using the integrated intensity of characteristic peaks of the $^1$H-NMR spectrum, and is a value obtained by performing measurement under the conditions described in the example section described later, followed by calculation.

Further, in the present invention, the number of vinyl moieties in the ethylene-based copolymer (A) preferably satisfies the range of 0.2 (number/total 1,000 C) or more.

In addition, in the present invention, the number of vinylidene moieties in the ethylene-based copolymer (A) preferably satisfies the range of 0.12 (number/total 1,000 C) or more.

(a-8) Relationship between number (Y) of comonomer branches and density (X)

The ethylene-based copolymer (A) preferably satisfies the number of comonomer branches (Y) and the density (X).

$$\text{expression (1): (Y)} \geq -1157 \times \text{(X)} + 1080$$

When the density and the number of branches are within the above-described ranges, a polyethylene resin composition excellent in easy-tearability and excellent in adhesive strength is obtained.

Note that the number of comonomer branches (Y) indicates the amount of tertiary carbon contained in the polymer, and is the number per total of 1,000 carbon atoms in the main chain and side chains, which is measured by NMR. It can be calculated from a $^{13}$C-NMR spectrum by referring to, for example, E. W. Hansen, R. Blom, and O. M.

Bade, Polymer, Vol. 36, p. 4295 (1997).

The relationship between the density and the number of branches can be adjusted by polymerization conditions such as the type and the ratio of a comonomer copolymerized, and a polymerization temperature.

(a-9) Relationship between number (Y) of comonomer branches and density (X)

The ethylene-based copolymer (A) preferably satisfies the number of comonomer branches (Y) and the density (X).

$$\text{expression (2): } (Y) \geq -1157 \times (X) + 1084$$

When the density and the number of branches are within the above-described ranges, a polyethylene resin composition excellent in easy-tearability and excellent in adhesive strength is obtained.

The relationship between the density and the number of branches can be adjusted by the type and the ratio of a comonomer copolymerized.

<Method for polymerizing ethylene-based copolymer (A)>

The method for producing the ethylene-based copolymer (A) for use in the present invention, which satisfies (a-1) to (a-4), is not limited, and may be a high-pressure radical polymerization method, a high-pressure ion polymerization method, a gas phase method, a solution method, a slurry method, or the like.

The catalyst for use in production of the ethylene-based copolymer (A) which more preferably satisfies (a-5) to (a-9) is not limited, but is more preferably a metallocene catalyst. The metallocene catalyst is not limited, and examples thereof include catalysts containing, as catalyst components, a metallocene compound such as a zirconium compound in which a group having a cyclopentadienyl skeleton or the like is coordinated, and a co-catalyst. It is particularly preferable to use a metallocene compound such as a zirconium compound in which a group having a cyclopentadienyl skeleton or the like is coordinated.

The production method is not limited, and may be a high-pressure ion polymerization method, a gas phase method, a solution method, a slurry method, or the like, but for obtaining the ethylene-based copolymer (A) according to the present invention in which double bonds are adjusted, it is desirable to perform polymerization at a high temperature of 150 to 330°C, and therefore it is preferable to use a high-pressure ion polymerization method ("Polyethylene Gijutu Dokuhon", Chapter 4, written and edited by Kazuo Matsuura and Naotaka Mikami, 2001).

(2) Polyethylene resin (C)

The polyethylene resin (C) contained in the polyethylene resin composition (B) in the present invention is polyethylene having the following characteristics (c-1) to (c-2), and preferably low-density polyethylene.

(c-1) Melt flow rate (MFR)

The melt flow rate (MFR) of the polyethylene resin (C) for use in the present invention is 0.1 to 100 g/10 min, preferably 0.5 to 50 g/10 min, and more preferably 1 to 20 g/10 min. If MFR is less than 0.1 g/10 minutes, the extensibility becomes insufficient, so that film breakage occurs during high-rate molding. On the other hand, if MFR is more than 100 g/10 min, the molten film is destabilized. Here, MFR is a value measured according to JIS-K7210 (190°C, load: 21.18 N).

(c-2) Density

The density of the polyethylene resin (C) for use in the present invention is 0.91 to 0.97 g/cm$^3$, preferably 0.915 to 0.96 g/cm$^3$, and more preferably 0.916 to 0.95 g/cm$^3$. A density of less than 0.91 g/cm$^3$ leads to heavy stickiness. On the other hand, a density of more than 0.97 g/cm$^3$ leads to insufficient adhesiveness.

Here, the density is measured according to JIS-K6922-2: 1997, Appendix (for low-density polyethylene) (23°C).

The method for producing the polyethylene resin (C) for use in the present invention is not limited, and may be a high-pressure radical polymerization method, a high-pressure ion polymerization method, a gas phase method, a solution method, a slurry method, or the like. Note that low-density polyethylene is produced by polymerizing ethylene under conditions of a polymerization pressure of 1,000 to 3,000 kg/cm$^2$ and a polymerization temperature of 150 to 300°C in the presence of a radical generator typically by using a tank-type reactor or a tube-type reactor. MFR can be adjusted by using hydrogen or a hydrocarbon such as methane or ethane as a molecular weight adjuster.

(3) Content ratio of ethylene-based copolymer (A) and polyethylene resin (C)

In the polyethylene resin composition (B) for use in the present invention, the content ratio (weight ratio) of the ethylene-based copolymer (A) and the polyethylene resin (C) on an (A) : (C) basis is 98 to 2 : 2 to 98, preferably 90 to 2 : 10 to 98, and more preferably 80 to 2 : 20 to 98. The content ratio is still more preferably 70 to 5 : 30 to 95, and an excessively large content of the ethylene-based copolymer (A) deteriorates the stability of a molten film.
In particular, the content ratio (weight ratio) of the ethylene-based copolymer (A) and the polyethylene resin (C) is preferably :50 to 5 : 50 to 95, more preferably 40 to 5 : 60 to 95 because the adhesive strength and the stability of a molten film are well balanced.

(4) Characteristics of polyethylene resin composition (B)

(b-1) Melt flow rate (MFR)

The melt flow rate of the polyethylene resin composition (B) for use in the present invention (MFR: 190°C, load: 21.18 N) is 1 to 100 g/10 min, preferably 1 to 80 g/10 min, and more preferably 2 to 70 g/10 min. An MFR of less than 1 g/10 min is not preferable because extensibility during molding is deteriorated, leading to an increase in load on a motor in an extrusion machine. On the other hand, an MFR of more than 100 g/10 min is not preferable because the state of a molten film during molding is destabilized.
Here, the MFR is a value measured according to JIS-K6922-2: 1997, Appendix (190°C, load: 21.18 N).

(b-2) Density

The density of the polyethylene resin composition (B) for use in the present invention is 0.88 to 0.94 $g/cm^3$, preferably 0.885 to 0.94 $g/cm^3$, and more preferably 0.89 to 0.935 $g/cm^3$. A density of less than 0.88 $g/cm^3$ is not preferable because blocking becomes insufficient. On the other hand, a density of more than 0.94 $g/cm^3$ is not preferable because adhesive property becomes insufficient.

(5) Other components blended

In the polyethylene resin composition (B) for use in the present invention or the resin layer (β) containing the polyethylene resin composition (B), additives such as antioxidants typically used for polyethylene-based resins, such as phenol-based and phosphorus-based antioxidants, stabilizers such as metal soaps, antiblocking agents, slipping agents, dispersants, pigments such as organic and inorganic colorants, antifogging agents such as unsaturated fatty acid esters, antistatic agents, ultraviolet absorbers, light stabilizers and nucleating agents may be blended as necessary. The amount of the additive added is preferably 700 ppm or less, more preferably 400 ppm or less, still more preferably 200 ppm or less, and most preferably 100 ppm or less. An excessively large amount of the additive is not preferable because adhesiveness becomes insufficient.
Other thermoplastic resins such as polyethylene-based resins such as LDPE, C4-LLDPE, HAO-LLDPE, an ethylene-vinyl acetate copolymer (EVA), an ethylene-acrylic acid copolymer (EAA), an ethylene-methacrylic acid copolymer (EMAA), an ethylene-acrylic acid ester copolymer (EEA, EMA, EMMA, etc.) and high density polyethylene (HDPE), adhesive resins such as an ethylene-maleic anhydride copolymer, polypropylene-based resins, and polystyrene resins may be blended in the resin layer (β) as long as the characteristics of the resin layer (β) are not impaired.

2. Adhesive agent layer (γ)

The adhesive agent layer (γ) for use in the present invention contains a reaction product of a polyol compound and a polyisocyanate compound. The adhesive agent layer (γ) for use in the present invention can be obtained by directly depositing an adhesive containing a reaction product of a polyol compound and a polyisocyanate compound on a substrate layer 2(δ) by known means such as application or extrusion, and curing the adhesive. Such an adhesive is preferably a two-liquid curable polyurethane resin-based adhesive. Both adhesiveness and easy-tearability can be secured by using an adhesive containing a reaction product of a polyol compound and a polyisocyanate compound as the adhesive agent layer (γ).
For the resulting adhesive agent layer (γ), an adhesive containing a reaction product of a polyol compound and a polyisocyanate compound and heretofore used in an extrusion coating method or a dry lamination method can be used.
The polyol is a polyol component having at least two hydroxyl groups in the molecule. Examples of such a polyol component include polyurethane polyols, polyester polyols, polyether polyols, acrylic polyols, and resin composition polyols for lamination, and these polyol components may be used alone or in combination of two or more thereof.

Examples of the isocyanate component having at least two isocyanate groups in the molecule include araliphatic diisocyanates, aliphatic diisocyanates, and alicyclic diisocyanates. Specific examples of the araliphatic diisocyanate include 1,3- or 1,4-xylylene diisocyanate or mixtures thereof, 1,3- or 1,4-bis(1-isocyanato-1-methylethyl) benzene or mixtures thereof, and ω,ω'-diisocyanato-1,4-diethylbenzene. Specific examples of the aliphatic diisocyanate include hexamethylene diisocyanate, tetramethylene diisocyanate, 2-methyl-pentane-1,5-diisocyanate, 3-methyl-pentane-1,5-diisocyanate, lysine diisocyanate, and trioxyethylene diisocyanate. Specific examples of the alicyclic diisocyanate include isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethyl xylene diisocyanate. These isocyanate components may be used alone or in combination of two or more thereof.

Specific examples include A-3210/A-3070, A-3210/A3072 and A-3210/A-3075 (manufactured by Mitsui Chemicals, Inc.), SEIKADYNE 2710A/SEIKADYNE 2810C(T), SEIKADYNE 2730A/SEIKADYNE 2730B and SEIKADYNE 2710A/SEIKADYNE 2710C (manufactured by Dainichiseika Color & Chemicals Mfg.Co.,Ltd.), EL-510/CAT-RT80, EL-530 A/EL-530B and EL-540/CAT-RT32 (manufactured by Toyo Morton Co., Ltd.), and T-120 A/T-300 curing agents, T-150/T-122 and T-160/T-125 (manufactured by Nippon Soda Co., Ltd.) as adhesives used in extrusion lamination processing (anchor coating agents), and DICDRY LX-401A, 75A, 719, 703VL, 500 and 510 (manufactured by DIC Graphics Corporation), TAKELAC/TAKENATE A-909/A-5, A-977/A-92, A-606/A-50, A-515/A-50, A-626/A-50, A-525/A-52 and A-666/A-65 (manufactured by Mitsui Chemicals, Inc.), and RU-77, 771, 3600 and 3900 (manufactured by ROCK PAINT Co.,Ltd.) as adhesives used in dry lamination processing. It is particularly preferable to use A-3210/A-3070, A-3210/A3072 and A-3210/A-3075 (manufactured by Mitsui Chemicals, Inc.), SEIKADYNE 2710A/SEIKADYNE 2810C(T) and SEIKADYNE 2710A/SEIKADYNE 2710C (manufactured by Dainichiseika Color & Chemicals Mfg. Co., Ltd.), EL-510/CAT-RT80 and EL-540/CAT-RT32 (manufactured by Toyo Morton Co., Ltd.), and the like.

3. Substrate layer 1(α) and substrate layer 2(δ)

Examples of the substrate layer 1(α) and the substrate layer 2(δ) for use in the present invention include single-layer films or sheets of polyamide, polyester, polypropylene, polyethylene, an ethylene-vinyl alcohol copolymer, polyvinylidene chloride, polycarbonate or the like, laminated films or laminated sheets including the materials of the same type or different types, stretched products of any of the films or sheets, paper such as kraft paper, metal foils or metal plates of aluminum, iron, copper, or an alloy containing any of these metals as a main component, plastic films or sheets vapor-coated with a metal, an inorganic substance or an organic substance, cellophane, woven fabrics, nonwoven fabrics, and barrier-coated paper or plastic films. The types of the substrate layer 1(α) and the substrate layer 2(δ) may be the same or different.

Among the above-described materials, metal foils or metal plates of aluminum, iron, copper, or an alloy containing any of these metals as a main component, plastic films or sheets vapor-coated with a metal, an inorganic substance or an organic substance, and barrier-coated paper or plastic films are preferable as the substrate layer 1(α) from the viewpoint of protection of contents.

The substrate layer 1(α) for use in the present invention is preferably a substrate having an oxygen permeability of 1,300 mL/m$^2$·day·MPa or less, more preferably 400 mL/m$^2$·day·MPa or less at 20°C and 65% RH. By using the substrate for the substrate layer 1(α), a laminate having good content protecting performance can be obtained.

The substrate layer 1(α) and the substrate layer 2(δ) may be printed, or coated in various forms.

4. Laminate

The laminate of the present invention includes at least four layers which are, respectively, a substrate layer 1(α), a resin layer (β), an adhesive agent layer (γ) and a substrate layer 2 (δ). The substrate layer 1(α), the resin layer (β), the adhesive agent layer (γ) and the substrate layer 2(δ) are laminated adjacent to one another.

The laminate of the present invention may include additional layers as long as it has the above-described configuration. For example, different resin layers and/or different substrate layers may be present on the outer side of the substrate layer 1(α) and/or the substrate layer 2(δ).

Here, examples of the different resin layer include LDPE, C4-LLDPE, HAO-LLDPE, an ethylene-vinyl acetate copolymer (EVA), an ethylene-acrylic acid copolymer (EAA), an ethylene-methacrylic acid copolymer (EMAA), an ethylene-acrylic acid ester copolymer (EEA, EMA, EMMA, etc.) and high density polyethylene (HDPE), adhesive resins such as an ethylene-maleic anhydride copolymer, polypropylene-based resins, and polystyrene resins.

Examples of the different substrate layer include single-layer films or sheets of polyamide, polyester, polypropylene, polyethylene, an ethylene-vinyl alcohol copolymer, polyvinylidene chloride, polycarbonate or the like, laminated films or laminated sheets including the materials of the same type or different types, stretched products of any of the films or sheets, paper such as kraft paper, metal foils or metal plates of aluminum, iron, copper, or an alloy containing any of these metals as a main component, plastic films or sheets vapor-coated with a metal, an inorganic substance or an organic substance, cellophane, woven fabrics, nonwoven fabrics, and barrier-coated paper or plastic films.

The method for producing the laminate is not limited, but is preferably a so-called extrusion coating method in which a polyethylene resin composition is melted, extruded and laminated on a substrate layer. In addition, in the extrusion coating, one or more layers are preferably laminated by a method such as a single layer method, sandwich lamination, coextrusion lamination, or tandem lamination. The present invention enables high-rate molding because of good adhesiveness to the substrate.

The method for securing adhesiveness between the substrate layer 1($\alpha$) and the resin layer ($\beta$) is not particularly limited. For example, surface treatment, and anchor coating treatment if necessary, can be performed on the surface of the substrate layer 1($\alpha$). Examples of the surface treatment method include various treatment methods such as a corona discharge treatment method, an ozone treatment method, a frame treatment method, and a low-temperature plasma treatment method. Another example is a method in which ozone is sprayed to a molten resin.

An aspect of the method for producing the laminate of the present invention is a method in which in an extrusion lamination molding machine, the substrate layer 2($\delta$) is fed from a feeder, the polyethylene resin composition (B) is extruded and molded to form a resin layer ($\beta$) with a predetermined thickness, the substrate layer 1($\alpha$) is fed from the sandwich side to form the adhesive agent layer ($\gamma$) on a surface of the substrate layer 2($\delta$) on the resin layer ($\beta$) side, and extrusion sandwich lamination processing is performed to produce a laminate including at least four layers which are, respectively, the substrate layer 1($\alpha$), the resin layer ($\beta$), the adhesive agent layer ($\gamma$) and the substrate layer 2($\delta$).

Here, the polyethylene resin composition (B) contains an ethylene-based copolymer (A) and a polyethylene resin (C).

The laminate of the present invention is a laminate including a resin layer ($\beta$) containing a polyethylene resin composition (B) and an adhesive agent layer ($\gamma$) containing a specific compound, which is excellent in adhesive strength with a substrate and the like, has good handling characteristics such as an easily tearing characteristic, and is excellent in both content protecting performance and easy-openability.

The laminate of the present invention is excellent in adhesive strength with a substrate or the like and excellent in easy-tearability, and therefore can be suitably used as a packaging material (laminate for packaging).

That is, another aspect of the present invention is a packaging material (laminate for packaging) obtained using the laminate of the present invention.

Here, in the present specification, the packaging material and the packaging laminate are used synonymously. The packaging material or laminate for packaging according to the present invention is obtained by molding and processing the laminate of the present invention by a predetermined method.

Non-limiting examples of the packaging material or laminate for packaging according to the present invention include films for easily tearable packaging bags, films for food packaging, paper containers for liquid, containers for packaging frozen confectionery such sweet bean jelly and jelly, dry food, fat/oil and confectionery, paper bundling, paper cups, and paper trays.

Examples

Hereinafter, the present invention will be described by way of examples, which should not be construed as limiting the present invention. Measurement methods, resins and adhesives used in examples and comparative examples are as follows.

1. Method for evaluating physical properties of resin

(1) Melt flow rate (MFR)

The MFRs of an ethylene-based copolymer, a polyethylene resin and a polyethylene resin composition were measured according to JIS-K6922-2: 1997, Appendix (190°C, load: 21.18 N).

(2) Density

The densities of the ethylene-based copolymer, the polyethylene resin and the polyethylene resin composition were measured according to JIS-K6922-2: 1997, Appendix (23°C, for low-density polyethylene).

(3) Total amount of melting heat $\Delta$Hm and crystallization temperature Tc

The total amount of melting heat $\Delta$Hm and the crystallization temperature Tc of the ethylene-based copolymer were measured according to JIS-K7121-1987. Measurement samples obtained by hot-pressing pellets into a sheet and punching the sheet were used. First heating, cooling and second heating are performed in the stated order under the following conditions. A temperature corresponding to a maximum peak height during cooling is defined as Tc, and the amount of melting heat in a melting curve during second heating is defined as $\Delta$Hm.

Apparatus: DSC 7020 manufactured by SII NanoTechnology Inc.

<Heating conditions>

- First heating: at 10°C/min from 30°C to 200°C
- Cooling: at 10°C/min from 200°C to -30°C
- Second heating: at 10°C/min from -30°C to 200°C
- Temperature holding time: 5 minutes after first heating and 5 minutes after cooling
- Sample amount: 5mg
- Temperature calibration: indium
- Reference: aluminum

(4) Comonomer amount, number of comonomer branches and number of double bonds

The comonomer amount and the number of comonomer branches (Y), and the amount of double bonds (vinyl and vinylidene) were measured by $^{13}$C-NMR and $^{1}$H-NMR, respectively, under the following conditions, and each determined as a number per total of 1,000 carbon atoms in the main chain and side chains.

Apparatus: AVANCE III cryo-400 MHz manufactured by Bruker BioSpin K.K.
Solvent: o-dichlorobenzene/deuterated bromobenzene = 8/2 mixed solution

<Sample amount>

460 mg of sample/2.3 ml of solvent

<$^{13}$C-NMR>

- $^{1}$H decoupled, with NOE
- Number of scanning times: 256 scans
- Flip angle: 90°
- Pulse interval: 20 sec·AQ (acquisition time) = 5.45 s D1 (waiting time) = 14.55 s

<$^{1}$H-NMR>

- Number of scanning times: 1,400 scans
- Flip angle: 1.03°
- AQ (acquisition time) = 1.8 s D1 (waiting time) = 0.01 s

(4) Adhesive strength

The obtained laminate was cut into a 15 mm-thick strip shape in a machine direction, and delaminated at an interface between a substrate layer 1($\alpha$) and a resin layer ($\beta$), and the delamination strength in a T-delamination test when the number of test samples was 5 and the delamination rate was 300 mm/min was taken as adhesive strength. In the case where the resin layer ($\beta$) was cut while the resin layer ($\beta$) was pulled and peeled from the substrate layer 1($\alpha$), a numerical value at the highest point in the chart was taken as adhesive strength.

(5) Tearability

The cutting property when the obtained laminate was manually torn from a notch portion in each of the machine direction (MD) during processing and a direction perpendicular to the machine direction (TD) was sensorily evaluated. A sample which did not elongate and was cut without difficulty when torn was rated "o", and a sample which elongated and was difficult to cut was rated "x".

2. Materials

(1) Ethylene-based copolymer (A)

(PE-1) to (PE-3) obtained by the following production method, and a commercially available metallocene-based ethylene/α-olefin copolymer (PE-4) were each used as the ethylene-based copolymer component (A). Table 1 shows the physical property values.

<Method for producing (PE-1) to (PE-3)>

(i) Preparation of catalyst

To 0.05 mol of the complex "rac-dimethylsilylenebis(indenyl) hafnium dimethyl" prepared by the method described in JP 10-218921 A, an equimolar amount of "N,N-dimethylanilinium tetrakis(pentafluorophenyl)borate" was added, and the mixture was diluted with toluene to 50 liters to prepare a catalyst solution.

(ii) Polymerization method

A stirring autoclave-type continuous reactor having an internal volume of 5.0 liters was used. A raw material gas was continuously supplied at a rate of 40 kg/hour while the pressure in the reactor was maintained at 80 MPa and ethylene, propylene and 1-hexene were appropriately adjusted. In addition, the catalyst solution described in the section "(i) Adjustment of catalyst" was continuously supplied, and the polymerization temperature was appropriately adjusted within the range of 150 to 250°C to obtain an ethylene-based copolymer.
Table 1 shows the physical property values of the obtained ethylene-based copolymer.

(2) Polyethylene resin (C)

Polyethylene resins (PE-5) and (PE-6) having the physical properties shown in Table 1 were used.

(3) Adhesive agent layer (γ)

As the adhesive agent layer (γ), (AC-1) to (AC-3) described below were used.

(AC-1) A mixture of TAKELAC A-3210 manufactured by Mitsui Chemicals, Inc., TAKENATE A-3075 manufactured by Mitsui Chemicals, Inc. and ethyl acetate at a ratio of 3 : 1 : 28 (solid content concentration: 7 wt%, containing a reaction product of a polyol compound and a polyisocyanate compound)
(AC-2) A mixture of SEIKADYNE 2710A and SEIKADYNE 2810C(T) (manufactured by Dainichiseika Color & Chemicals Mfg.Co.,Ltd.) and ethyl acetate at a ratio of 1 : 2 : 15.6 (solid content concentration: 7 wt%, containing a reaction product of a polyol compound and a polyisocyanate compound)
(AC-3) A mixture of ORIBAIN EL420 manufactured by Toyo Morton Co., Ltd. and ethyl acetate at a ratio of 1 : 9 (free of a reaction product of a polyol compound and a polyisocyanate compound)

(4) Substrate layer 1(α)

An aluminum foil (thickness: 7 um) manufactured by Toyo Aluminium K.K. was used. Hereinafter, this is referred to as (substrate-1).

(5) Substrate layer 2(δ)

ESPET FILM T4102 (thickness: 12 um) manufactured by Toyobo Co., Ltd. was used. Hereinafter, this is referred to as (substrate-2).

(Example 1)

5% By weight of the ethylene-based copolymer (A) (PE-1) and 95% by weight of the polyethylene resin (C) (PE-5) were blended. These resins were sufficiently mixed, and pellets of the polyethylene resin composition (B) were obtained using a 40 mmφ single-screw extruder.

In an extrusion lamination molding machine, (substrate-2) having a width of 500 mm was fed as the substrate layer 2(δ) from a feeder, the pellets obtained as described above were adjusted to a take-up rate of 100 m/min and a coating thickness of 15 um, and (substrate-1) was fed as the substrate layer 1(α) from the sandwich side to perform extrusion sandwich lamination. Here, anchor coating treatment was performed on a surface of the substrate layer 2(δ) on the resin layer (β) side using (AC-1) as the adhesive agent layer (γ). Next, anchor coating treatment was performed on a surface of the substrate layer 1(α) on a side opposite to the resin layer (b) using (AC-1), and LDPE (NOVATEC LC600A manufactured by Japan Polyethylene Corporation) was extruded and laminated at a take-up speed of 100 m/min to a coating thickness of 20 um to obtain a laminate of a substrate layer 2(δ), an adhesive agent layer (γ), a resin layer (β), a substrate layer 1(α) and a LC600A layer.

The extrusion lamination molding machine was set so that the temperature of the resin extruded from a T-die mounted in the extruder having an opening diameter of 90 mmφ was 320°C, and the extrusion amount was adjusted so that the coating thickness met a specified value when the surface temperature of a cooling roll was 20°C, the die width was 560 mm and the take-up processing rate was 100 m/min. Subsequently, the adhesive strength and the tearability were evaluated using the obtained laminate. Table 1 shows the evaluation results.

(Example 2)

A laminate was produced in the same manner as in Example 1 except that with respect to Example 1, 10% by weight of the ethylene-based copolymer (A) (PE-1) and 90% by weight of the polyethylene resin (C) (PE-5) were used. Table 1 shows the evaluation results.

(Example 3)

A laminate was produced in the same manner as in Example 1 except that with respect to Example 1, 20% by weight of the ethylene-based copolymer (A) (PE-1) and 80% by weight of the polyethylene resin (C) (PE-5) were used. Table 1 shows the evaluation results.

(Example 4)

A laminate was produced in the same manner as in Example 3 except that with respect to Example 3, (PE-2) was used in place of (PE-1) as the ethylene-based copolymer (A). Table 1 shows the evaluation results.

(Example 5)

A laminate was produced in the same manner as in Example 3 except that with respect to Example 3, (PE-3) was used in place of (PE-1) as the ethylene-based copolymer (A). Table 1 shows the evaluation results.

(Example 6)

A laminate was produced in the same manner as in Example 3 except that with respect to Example 3, (PE-6) was used in place of (PE-5) as the polyethylene resin (C), and (AC-2) was used in place of (AC-1) as the adhesive agent layer (γ). Table 1 shows the evaluation results.

(Comparative Example 1)

A laminate was produced in the same manner as in Example 4 except that with respect to Example 4, 70% by weight of the ethylene-based copolymer (A) (PE-2) and 30% by weight of the polyethylene resin (C) (PE-5) were used, and (AC-3) was used in place of (AC-1) as the adhesive agent layer (γ). Table 1 shows the evaluation results.

(Comparative Example 2)

A laminate was produced in the same manner as in Example 4 except that with respect to Example 4, (PE-6) was used in place of the polyethylene resin (C) (PE-5), and (AC-3) was used in place of (AC-1) as the adhesive agent layer (γ). Table 1 shows the evaluation results.

(Comparative Example 3)

A laminate was produced in the same manner as in Example 4 except that with respect to Example 6, (AC-3) was used in place of (AC-1) as the adhesive agent layer (γ). Table 1 shows the evaluation results.

(Comparative Example 4)

A laminate was produced in the same manner as in Example 3 except that with respect to Example 6, (PE-4) was used in place of the ethylene-based copolymer (A) (PE-2), and (AC-3) was used in place of (AC-1) as the adhesive agent layer (γ). Table 1 shows the evaluation results.

(Comparative Example 5)

A laminate was produced in the same manner as in Example 1 except that with respect to Example 1, the ethylene-based copolymer (A) was not used and the polyethylene resin composition (B) made from only the polyethylene resin (C) (PE-5) was used. Table 1 shows the evaluation results.

[Table 1]

| | Item | Unit | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Ethylene-based polymer (A)) | Type | - | PE-1 | PE-1 | PE-1 | PE-2 | PE-3 | PE-1 | PE-2 | PE-2 | PE-1 | PE-4 | - |
| | Compounding ratio | wt% | 5 | 10 | 20 | 20 | 20 | 20 | 70 | 20 | 20 | 20 | - |
| | MFR | g/10 min | 23 | 23 | 23 | 11 | 44 | 23 | 11 | 11 | 23 | 12 | - |
| | Density (X) | g/cm$^3$ | 0.887 | 0.887 | 0.887 | 0.913 | 0.896 | 0.887 | 0.913 | 0.913 | 0.887 | 0.911 | - |
| | Total amount of melting heat $\Delta Hm$ | J/g | 58 | 58 | 58 | 112 | 76 | 58 | 112 | 112 | 58 | 112 | - |
| | Crystallization temperature Tc | °C | 45 | 45 | 45 | 82 | 59 | 45 | 82 | 82 | 45 | 102 | - |
| Polyethylene resin (C) | Type | - | PE-5 | PE-5 | PE-5 | PE-5 | PE-5 | PE-6 | PE-5 | PE-6 | PE-6 | PE-6 | PE-5 |
| | Compounding ratio | wt% | 95 | 90 | 80 | 80 | 80 | 80 | 30 | 80 | 80 | 80 | 100 |
| | MFR | g/10 min | 7 | 7 | 7 | 7 | 7 | 8 | 7 | 8 | 8 | 8 | 7 |
| | Density | g/cm$^3$ | 0.918 | 0.918 | 0.918 | 0.918 | 0.918 | 0.919 | 0.918 | 0.919 | 0.919 | 0.919 | 0.918 |
| Polyethylene resin composition (B) | MFR | g/10 min | 7 | 8 | 9 | 8 | 10 | 9 | 10 | 9 | 10 | 9 | 7 |
| | Density | g/cm$^3$ | 0.916 | 0.915 | 0.912 | 0.917 | 0.913 | 0.913 | 0.915 | 0.918 | 0.912 | 0.917 | 0.918 |

|  | Item | Unit | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Ethylene-based copolymer (A) Composition property | C2 content | mol% | 84.6 | 84.6 | 84.6 | 92.8 | 87.2 | 84.6 | 92.8 | 92.8 | 84.6 | 95.2 | 1000 |
|  | C3 content | mol% | 15.4 | 15.4 | 15.4 | 7.0 | 12.7 | 15.4 | 7.0 | 7.0 | 15.4 | - | - |
|  | C4 content | mol% | - | - | - | - | - | - | - | - | - | - | - |
|  | C6 content | mol% | - | - | - | 0.2 | 0.1 | - | 0.2 | 0.2 | - | 4.8 | - |
|  | C8 content | mol% | - | - | - | - | - | - | - | - | - | - | - |
|  | MA content | mol% | - | - | - | - | - | - | - | - | - | - | - |
|  | Number of comonomer branches (Y) | number/ 1000C | 72 | 72 | 72 | 37 | 60 | 72 | 37 | 37 | 72 | 22 | - |
|  | Calculated value on right side of expression (1) | number/ 1000C | 54 | 54 | 54 | 24 | 43 | 54 | - 24 | 24 | 54 | 26 | - |
|  | Expression (1) satisfied or not | - | ○ | ○ | ○ | ○ | ○ | ○ | ○ | ○ | ○ | × | - |
|  | Calculated value on right side of expression | number/ 1000C | 58 | 58 | 58 | 28 | 47 | 58 | 28 | 28 | 58 | 30 | - |
|  | Expression (2) satisfied or not | - | ○ | ○ | ○ |  | ○ | ○ | ○ | ○ | ○ | × | - |
|  | Vinyl | number/ 1000C | 0.27 | 0.27 | 0.27 | 0.30 | 0.33 | 0.27 | 0.30 | 0.30 | 0.27 | 0.06 | - |
|  | Vinylidene | number/ 1000C | 0.35 | 0.35 | 0.35 | 0.26 | 0.34 | 0.35 | 0.26 | 0.26 | 0.35 | 0.02 | - |
|  | Vinyl + vinylidene | number/ 1000C | 0.62 | 0.62 | 0.62 | 0.56 | 0.68 | 0.62 | 0.56 | 0.56 | 0.62 | 0.08 | - |
| Adhesive agent layer (γ) | Type | - | AC-1 | AC-1 | AC-1 | AC-1 | AC-1 | AC-2 | AC-3 | AC-3 | AC-3 | AC-3 | AC-1 |

(continued)

| | Item | | Unit | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|---|
| Quality | Adhesive strength | Substrate layer (α) | N/15 mm | 4.6 | 6.1* | 9.3* | 5.4* | 9.9* | 4.4 | 2.3 | 1.1 | 1.2 | 1.1 | 1.5 |
| | Tearability | | - | ○ | ○ | ○ | ○ | ○ | ○ | ○ | ○ | ○ | × | ○ |

*Sample broken during measurement adhesive strength
$(Y) \geq -1157*(X) + 1080$ (expression 1) (Y): number of comonomer branches, (X): density
$(Y) \geq -1157*(X) + 1084$ (expression 2) (Y): number of comonomer branches, (X): density

As is evident from the results in Table 1, the laminates of examples in the present invention are excellent in easy-tearability and excellent in adhesive strength with a substrate.

On the other hand, the laminates including the adhesive agent layer (γ) free of a reaction product of a polyol compound and a polyisocyanate compound (Comparative Examples 1 to 4) had poor adhesive strength, and in particular, the laminate of Comparative Example 4 had poor tearability as well because the total amount of melting heat and the crystallization temperature were high, and the number of branches and the number of double bonds were small. In the case where only the polyethylene resin (C) was used (Comparative Example 5), good adhesive strength was not obtained.

Industrial applicability

The laminate of the present invention can be used for packaging materials (laminates for packaging), specifically, easily tearable packaging bags, films for food packaging, paper containers for liquid, containers for packaging frozen confectionery such sweet bean jelly and jelly, dry food, fat/oil and confectionery, paper bundling, paper cups, paper trays, and the like.

**Claims**

1. A laminate comprising at least four layers which are, respectively, a substrate layer 1(α), a resin layer (β), an adhesive agent layer (γ) and a substrate layer 2(δ), wherein
   the substrate layer 1(α), the resin layer (β), the adhesive agent layer (γ) and the substrate layer 2(δ) are laminated adjacent to one another, and the resin layer (β) and the adhesive agent layer (γ) satisfy, respectively, the following characteristics:

   resin layer (β): comprising a polyethylene resin composition (B) containing an ethylene-based copolymer (A) having the following characteristics (a-1) to (a-4):

   (a-1) MFR (190°C, 21.18 N load) is 0.1 to 100 g/10 min,
   (a-2) a total amount of melting heat ΔHm is 30 to 120 J/g in DSC,
   (a-3) a crystallization temperature Tc is 25 to 90°C, and
   (a-4) containing 70 to 98 mol% of constituent units derived from ethylene as a main component, and 2 to 30 mol% of constituent units other than ethylene as an essential accessory component, and

   adhesive agent layer (γ): comprising a reaction product of a polyol compound and a polyisocyanate compound.

2. The laminate according to claim 1, wherein the polyethylene resin composition (B) comprises a polyethylene resin (C) having the following characteristics (c-1) to (c-2) :

   (c-1) MFR (190°C, 21.18 N load) is 0.1 to 100 g/10 min, and
   (c-2) a density is 0.91 to 0.97 g/cm$^3$.

3. The laminate according to claim 2, wherein a content ratio between the ethylene-based copolymer (A) and the polyethylene resin (C) (weight ratio A : C) in the polyethylene resin composition (B) is 98 to 2 : 2 to 98.

4. The laminate according to any one of claims 1 to 3, wherein the polyethylene resin composition (B) further satisfies the following characteristics (b-1) and (b-2):

   (b-1) MFR (190°C, 21.18 N load) is 1 to 100 g/10 min, and
   (b-2) a density is 0.88 to 0.94 g/cm$^3$.

5. The laminate according to any one of claims 1 to 4, wherein the ethylene-based copolymer (A) further satisfies the following characteristics (a-5) to (a-7):

   (a-5) 80 to 98 mol% of constituent units derived from ethylene as a main component, 2 to 20 mol% of constituent units derived from propylene as an essential accessory component are contained, and 5 mol% or less of constituent units derived from a third α-olefin that is an olefin other than ethylene and propylene as an accessory component may be contained
   (where when constituent units derived from the third α-olefin are contained, a total amount of constituent units derived from ethylene, constituent units derived from propylene and constituent units derived from the third $\alpha$-olefin does not exceed 100 mol%),

(a-6) a density is 0.88 to 0.94 g/cm$^3$, and

(a-7) a total amount of vinyl and vinylidene moieties in the ethylene-based copolymer is 0.35 (number/total 1,000 C) or more

(where the number of vinyl and vinylidene moieties is a number per total of 1,000 carbon atoms in a main chain and side chains which is measured by NMR).

6. The laminate according to any one of claims 1 to 5, wherein the ethylene-based copolymer (A) further satisfies the following characteristic (a-8):

   (a-8) the number of comonomer branches (Y) in the ethylene-based copolymer and the density (X) satisfy the relationship of the following expression (1):

$$\text{expression (1): (Y)} \geq -1157 \times \text{(X)} + 1080$$

   (where Y is a number per total of 1,000 carbon atoms in a main chain and side chains which is measured by NMR).

7. The laminate according to any one of claims 1 to 6, wherein the ethylene-based copolymer (A) further satisfies the following characteristic (a-9):

   (a-9) the number of comonomer branches (Y) in the ethylene-based copolymer and the density (X) satisfy the relationship of the following expression (2):

$$\text{expression (2): (Y)} \geq -1157 \times \text{(X)} + 1084$$

   (where Y is a number per total of 1,000 carbon atoms in a main chain and side chains which is measured by NMR).

8. The laminate according to any one of claims 1 to 7, wherein an oxygen permeability of the substrate layer 1($\alpha$) is 1,300 mL/m$^2$·day·MPa or less at 20°C and 65% RH.

9. The laminate according to any one of claims 1 to 8, wherein the laminate is formed by an extrusion coating method.

10. A packaging material obtained using the laminate according to any one of claims 1 to 9.

## INTERNATIONAL SEARCH REPORT

| International application No. |
|---|
| **PCT/JP2022/040906** |

| A. | CLASSIFICATION OF SUBJECT MATTER |
|---|---|

***B32B 27/32***(2006.01)i; ***B65D 65/40***(2006.01)i
FI: B32B27/32 C; B65D65/40 D

According to International Patent Classification (IPC) or to both national classification and IPC

| B. | FIELDS SEARCHED |
|---|---|

Minimum documentation searched (classification system followed by classification symbols)

B32B27/32; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2019/117209 A1 (JAPAN POLYETHYLENE CORP) 20 June 2019 (2019-06-20) claims, paragraphs [0022]-[0072], examples | 1-10 |
| Y | JP 2018-176605 A (PRIME POLYMER CO LTD) 15 November 2018 (2018-11-15) claims, paragraphs [0010]-[0030], [0037], [0048], example 2 | 1-10 |
| A | JP 10-315409 A (TOPPAN PRINTING CO LTD) 02 December 1998 (1998-12-02) entire text | 1-10 |
| A | JP 2020-62811 A (PRIME POLYMER CO LTD) 23 April 2020 (2020-04-23) entire text | 1-10 |
| A | JP 2004-9566 A (TORAY IND INC) 15 January 2004 (2004-01-15) entire text | 1-10 |
| A | JP 2009-298119 A (ASAHI KASEI CHEMICALS CORP) 24 December 2009 (2009-12-24) entire text | 1-10 |
| A | JP 2016-22613 A (JAPAN POLYETHYLENE CORP) 08 February 2016 (2016-02-08) entire text | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

# EP 4 427 935 A1

| INTERNATIONAL SEARCH REPORT<br>Information on patent family members | | International application No.<br>**PCT/JP2022/040906** |
|---|---|---|

| Patent document<br>cited in search report | Publication date<br>(day/month/year) | Patent family member(s) | Publication date<br>(day/month/year) |
|---|---|---|---|
| WO 2019/117209 A1 | 20 June 2019 | US 2020/0354551 A1<br>claims, paragraphs [0014]-<br>[0183], examples<br>EP 3725844 A1<br>CN 111356737 A<br>KR 10-2020-0088807 A | |
| JP 2018-176605 A | 15 November 2018 | (Family: none) | |
| JP 10-315409 A | 02 December 1998 | (Family: none) | |
| JP 2020-62811 A | 23 April 2020 | (Family: none) | |
| JP 2004-9566 A | 15 January 2004 | (Family: none) | |
| JP 2009-298119 A | 24 December 2009 | (Family: none) | |
| JP 2016-22613 A | 08 February 2016 | (Family: none) | |

Form PCT/ISA/210 (patent family annex) (January 2015)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1024539 A
- JP 2000212339 A
- JP 2006082547 A
- JP 2001191452 A
- JP 10218921 A

**Non-patent literature cited in the description**

- **E. W. HANSEN ; R. BLOM ; O. M. BADE.** *Polymer,* 1997, vol. 36, 4295
- Polyethylene Gijutu Dokuhon. 2001